# EUROPEAN PATENT APPLICATION

(11) **EP 4 583 004 A1**
(43) Date of publication of application: **09.07.2025**
(21) Application number: 24222362.6
(22) Date of filing: 20.12.2024
(51) Int. Cl.: G06N 3/045, G06N 3/084, G06N 3/09, G06N 5/02

(54) **INTEGRATION OF LEARNED DIFFERENTIABLE LOSS FUNCTIONS IN DEEP LEARNING MODELS**

(30) Priority: 04.01.2024 US 202418404113
(71) Applicant: Microsoft Technology Licensing, LLC, Redmond, WA 98052-6399 (US)
(72) Inventor: Boué, Laurent, Redmond, WA, 98052 (US); Rama, Kiran, Redmond, WA, 98052 (US)
(74) Representative: Grünecker Patent- und Rechtsanwälte PartG mbB

(57) **Abstract**

Systems and methods are disclosed herein for training a model with a learned loss function. In an example system, a first trained neural network is generated based on application of a first loss function, such as a predefined loss function. A set of values is extracted from one or more of the layers of the neural network model, such as the weights of one of the layers. A separate machine learning model is trained using the set of values and a set of labels (e.g., ground truth annotations for a set of data). The machine learning model outputs a symbolic equation based on the training. The symbolic equation is applied to the first trained neural network to generate a second trained neural network. In this manner, a learned loss function can be generated and used to train a neural network, resulting in improved performance of the neural network.

## Description

### BACKGROUND

Loss functions have become ubiquitous for various types of machine learning (ML) models. One purpose of a loss function is to quantity the difference between the ML model's performance on a sample of data (e.g., the value predicted by the model given a sample) and the data's ground-truth annotation. In various applications, the difference can be used to adjust certain parameters of a model such that future predictions by the model have a value closer to their ground-truth annotations. In conventional applications, loss functions are pre-defined using mathematical concepts that are not based on the samples used to train a ML model, resulting in performance limitations.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Systems and methods are disclosed herein for training a model with a learned loss function. In an example system, a first trained neural network is generated based on application of a first loss function, such as a predefined loss function. A set of values is extracted from one or more of the layers of the neural network model, such as the weights of one of the layers. A separate machine learning model is trained using the set of values and a set of labels (e.g., ground truth annotations for a set of data). In an example, the machine learning model outputs a symbolic equation based on the training. The symbolic equation is applied to the first trained neural network to generate a second trained neural network. In this manner, a learned loss function can be generated and used to train a neural network, resulting in improved performance of the neural network.

Further features and advantages of the embodiments, as well as the structure and operation of various embodiments, are described in detail below with reference to the accompanying drawings. It is noted that the claimed subject matter is not limited to the specific embodiments described herein. Such embodiments are presented herein for illustrative purposes only. Additional embodiments will be apparent to persons skilled in the relevant art(s) based on the teachings contained herein.

### BRIEF DESCRIPTION OF THE DRAWINGS/FIGURES

The accompanying drawings, which are incorporated herein and form a part of the specification, illustrate embodiments of the present application and, together with the description, further serve to explain the principles of the embodiments and to enable a person skilled in the pertinent art to make and use the embodiments.
FIG. 1 shows a block diagram of a system for training a machine learning model, in accordance with an example embodiment.
FIG. 2 block diagram of a system for learning a loss function to train a machine learning model, in accordance with an example embodiment.
FIG. 3 shows a flowchart of a method for training a model with a learned loss function, in accordance with an example embodiment.
FIG. 4 shows a flowchart of a method for generating a symbolic equation as a differentiable equation based on a limited search space, in accordance with an example embodiment.
FIG. 5 shows a flowchart of a method for extracting embeddings from a neural network, in accordance with an embodiment.
FIG. 6 shows a flowchart of a method for replacing a loss function of a neural network, in accordance with an embodiment.
FIG. 7 shows a flowchart of a method for extracting a set of weights of a neural network, in accordance with an embodiment.
FIG. 8 shows a block diagram of an example computer system in which embodiments may be implemented.

The subject matter of the present application will now be described with reference to the accompanying drawings. In the drawings, like reference numbers indicate identical or functionally similar elements. Additionally, the left-most digit(s) of a reference number identifies the drawing in which the reference number first appears.

### DETAILED DESCRIPTION

### I. Introduction

The following detailed description discloses numerous example embodiments. The scope of the present patent application is not limited to the disclosed embodiments, but also encompasses combinations of the disclosed embodiments, as well as modifications to the disclosed embodiments. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

### II. Example Embodiments

Loss functions have become ubiquitous for various types of machine learning (ML) models. One purpose of a loss function is to quantity the difference between the ML model's performance on a sample of data (e.g., the value predicted by the model given a sample) and the data's ground-truth annotation. In various applications, the difference can be used to adjust certain parameters of a model such that future predictions by the model have a value closer to their ground-truth annotations. For example, when gradient descent techniques are utilized, the process of adjusting parameters of the model entails an evaluation of the derivatives of the loss function with respect to the model's parameters. For instance, such loss functions rely on cross-entropy or mean squared error (MSE) techniques. However, in conventional applications, these loss functions are pre-defined using mathematical concepts that are not based on the samples used to train a ML model, resulting in performance limitations.

Although ML developers and domain experts can attempt to manually design loss functions, such a process is typically complex especially when different dimensions are involved and each dimension is weighted differently. Even then, such loss functions do not accurately reflect the business objectives, resulting in degraded performance of the generated model.

Embodiments described herein are directed to training a model with a learned loss function. In an example system, a first trained neural network is generated based on application of a first loss function, such as a predefined loss function. A set of values is extracted from one or more of the layers of the neural network model, such as the weights of one of the layers. A separate machine learning model is trained using the set of values and a set of labels (e.g., ground truth annotations for a set of data). In an example, the machine learning model outputs a symbolic equation based on the training. The symbolic equation is applied to the first trained neural network to generate a second trained neural network. In this manner, a learned loss function can be generated and used to train a neural network, resulting in improved performance of the neural network.

Accordingly, example embodiments are directed to techniques for learning a loss function that is used to train a model, such as a neural network. Example embodiments described herein advantageously provide improvements in various areas of computing, including but not limited to, a reduction in the number of processing cycles used for training models. For instance, by learning a loss function that more accurately represents the data upon which a model is initially trained, further training of the model can be performed with a faster convergence. In other words, with conventional approaches utilizing a loss function that is not tailored to the data, a large number of iterations is typically required before model training is complete, resulting in a slower overall convergence of the model. With implementation of the disclosed techniques, the loss function is learned in a manner that is better aligned to the data (e.g., better aligned with underlying business objectives or other objectives), resulting in a reduction in the number of iterations to train the model. As a result, processing cycles can be reduced. In addition, where model generation involves multiple entities or groups (e.g., a business team that utilizes the model and a machine learning team that trains the model), a faster convergence of the model can also reduce the communications between such teams during the model generation process (e.g., less communications between teams for training a model, refining a model, etc.). Since the number of communications are reduced (each of which can involve transmitting or accessing the model over a network), utilization of network resources can also be reduced.

In another illustration, a user training a model with a loss function based on a log loss tech may continue training with additional iterations with the goal of minimizing the log loss. However, if the user does not understand the operation of the log loss function (or any other loss function), an excessive number of training which may be performed (resulting in increased processing cycles) due to the user's lack of understanding. With the disclosed techniques, a loss function can be learned as a symbolic equation and presented to a user, which may be easier to understand. As a result of the user's increased understanding, the user may be able to conclude training the model with a reduced number of training iterations, reducing the overall number of processing cycles. In other words, the loss function is interpretable to various users (e.g., stakeholders, business users, etc.) such that a stopping point for model training can be more easily determined.

Still further, the embodiments described herein may advantageously improve the performance of ML models. In particular, inferences generated by such models are more accurate as the loss function is learned based on the data (rather than predefined). Improving the accuracy of predictive ML models advantageously improves the functioning of computing devices on which such models are being executed. In particular, training models in a more accurate fashion advantageously reduces consumption of processing resources of the computing devices applying those models.

Moreover, any technological field in which such models are utilized are also improved. For instance, consider a scenario in which a predictive ML model is used in an industrial process, such as predictive maintenance or manufacturing. The ability to predict disruptions to the production line in advance of that disruption taking place, or analyze objects coming off a production line, is invaluable to the manufacturer. The manager is enabled to schedule the downtime at the most advantageous time and eliminate unscheduled downtime, as well as perform any appropriate adjustments to the manufacturing process more readily. Unscheduled downtime and faulty products can hit the profit margin hard and also can result in the loss of the customer base. It also disrupts the supply chain, causing the carrying of excess stock. A poorly-functioning ML model would improperly predict disruptions, and therefore, would inadvertently cause undesired downtimes that disrupt the supply chain.

Consider yet another scenario in which a ML model is used in a restaurant or other product-producing facility, where the ML model is used to track how many items are being made and/or sold. A camera mounted in the restaurant can capture images of a counter or the like where completed products are placed and log the number and/or frequency at which products are being made and/or sold. The ML model can allow a business to increase profits by advertising items that may not be selling as well, improving personnel efficiency during high demand times, updating product offerings, etc.

Consider yet another scenario in which an ML model is used in a retail establishment, such as in a self-checkout area of a retail business. A camera mounted near the self-checkout register may apply an ML model to detect items being scanned at the register, and be used to compare with the weights of those items to reduce the likelihood of theft or improper barcode labeling. By improving the accuracy of the model, items can be more accurately identified in self-checkout registers, potentially resulting in improved profit margins.

Consider yet another scenario in which a ML model is used for autonomous (i.e., self-driving vehicles). Autonomous vehicles can get into many different situations on the road. If drivers are going to entrust their lives to self-driving cars, they need to be sure that these cars will be ready for any situation. What's more, a vehicle should react to these situations better than a human driver would. A vehicle cannot be limited to handling a few basic scenarios. A vehicle has to learn and adapt to the ever-changing behavior of other vehicles around it. ML algorithms make autonomous vehicles capable of making decisions in real time. This increases safety and trust in autonomous cars. A poorly-functioning ML model may misclassify a particular situation in which the vehicle is in, thereby jeopardizing the safety of passengers of the vehicle.

Consider a further scenario in which a ML model is used in biotechnology for predicting a patient's vitals or whether a patient has a disease. A poorly-functioning ML model may misclassify the vitals and/or the disease. In such a case, the patient may not receive necessary treatment.

These examples are just a small sampling of technologies that would be improved with more accurate ML models.

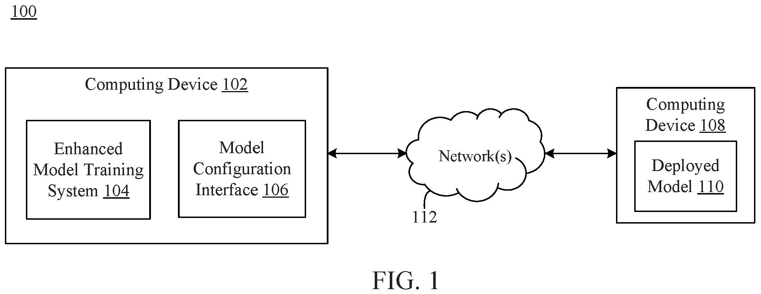

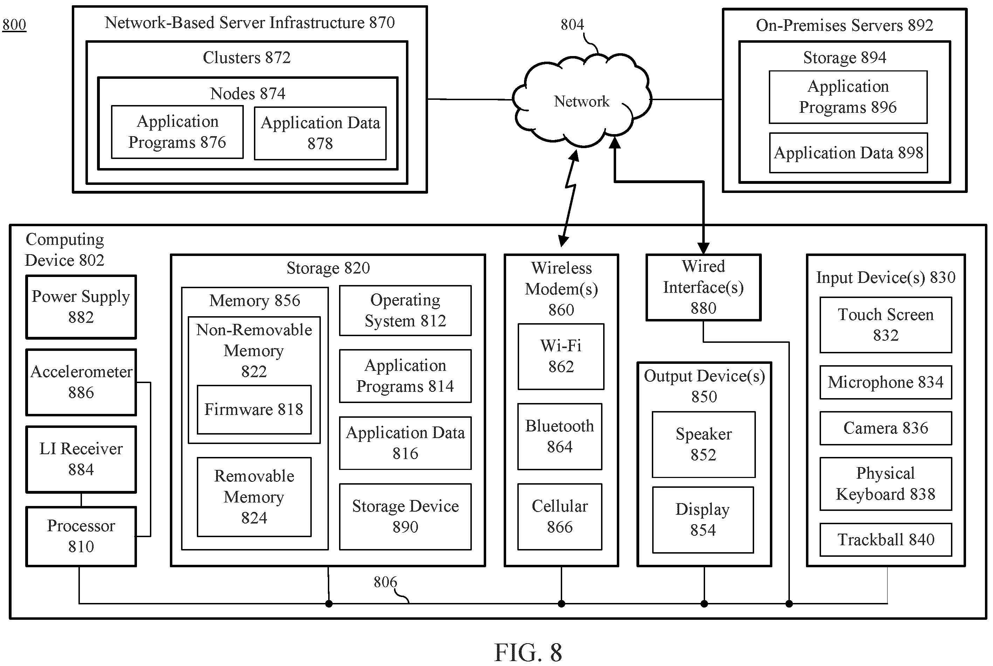

Embodiments for training a model with a learned loss function are implemented in various way. For instance, FIG. 1 shows a block diagram of system 100 for training a machine learning model, in accordance with an example embodiment. As shown in FIG. 1, system 100 includes a computing device 102, a computing device 108, and a network 116. Computing device 102 includes an enhanced model training system 104 and a model configuration interface 106. Computing device 108 includes a deployed model 110. An example device that may incorporate the functionality of computing device 102 and/or computing device 108 (or any subcomponents therein, whether or not illustrated in FIG. 1) is described below in reference to FIG. 8. It is noted that system 100 may comprise any number of devices, including those illustrated in FIG. 1 and optionally one or more further devices or components not expressly illustrated. System 100 is further described as follows.

In an example implementation, network 112 includes one or more of any of a local area network (LAN), a wide area network (WAN), a personal area network (PAN), a combination of communication networks, such as the Internet, and/or a virtual network. In example implementations, computing device 102 and computing device 108 communicate via network 112. In an implementation, any one or more of computing device 102 and/or computing device 108 communicate over network 112via one or more application programming interfaces (API) and/or according to other interfaces and/or techniques. In an example, computing device 102 and/or computing device 108 each include at least one network interface that enables communications with each other. Examples of such a network interface, wired or wireless, include an IEEE 802.11 wireless LAN (WLAN) wireless interface, a Worldwide Interoperability for Microwave Access (Wi-MAX) interface, an Ethernet interface, a Universal Serial Bus (USB) interface, a cellular network interface, a Bluetooth^{™} interface, a near field communication (NFC) interface, etc. Further examples of network interfaces are described elsewhere herein.

In examples, computing device 102 comprises any one or more computing devices, servers, services, local processes, remote machines, web services, etc. for generating and/or training a machine learning (ML) model. For instance, computing device 102 may comprise a computing device (e.g., a server) located on an organization's premises and/or coupled to an organization's local network, a remotely located server, a cloud-based server (e.g., one or more servers in a distributed manner), or any other device or service for generating and/or training a ML model. In examples, computing device 102 comprises any one or more resources coupled to a network, including but not limited to computing or processing resources, software resources (e.g., software as a service (SaaS), platform as a service (PaaS), etc.), storage resources (e.g., physical storage devices, local storage devices, cloud-based storages, hard disk drives, solid state drives, random access memory (RAM) devices, etc.), databases, etc. in connection with training a ML model. In some example embodiments, features of computing device 102 are accessible via a cloud. However, it should be understood that this implementation is only intended to be illustrative, and disclosed techniques can be utilized with respect to other types of implementations (e.g., local resources) that are accessible via other means, such as a local network.

In examples, computing device 102 comprises any type of stationary or mobile computing device, including a mobile computer or mobile computing device (e.g., a Microsoft^{®} Surface^{®} device, a personal digital assistant (PDA), a laptop computer, a notebook computer, a tablet computer, a netbook, etc.), a desktop computer, a server, a mobile phone or handheld device (e.g., a cell phone, a smart phone, etc.), a wearable computing device (e.g., a head-mounted device including smart glasses, a smart watch, etc.), an Internet-of-Things (IoT) device, or other type of stationary or mobile device. Computing device 102 is not limited to a physical machine, but may include other types of machines or nodes, such as a virtual machine. In an examples, computing device 102 interfaces with other components illustrated in FIG. 1 through APIs and/or by other mechanisms.

Enhanced model training system 104 is configured to train a ML model in accordance with techniques disclosed herein. In examples, enhanced model training system 104 generates a learned loss function that is used to train the ML model. In one example implementation, enhanced model training system 104 generates a pre-trained ML model that is trained using a set of samples and ground truth annotations (e.g., labels) in accordance with an initial training criteria. In one implementation, the initial training criteria comprises predetermined number of training iterations (e.g., epochs) before a convergence of the model is achieved. In examples, the initial training of the pre-trained ML model implements a predefined loss function, such as cross-entropy, MSE, etc.

In an example system, enhanced model training system 104 extracts values of one of the layers (e.g., a final layer) of the pretrained model based on passing each sample of asset of samples through the model in an inference mode. Such values can include, for instance, an embeddings for each of the samples. Using these values as features and associated ground truth annotations as labels, enhanced model training system 104 is configured to train a separate, surrogate model in various examples. This surrogate model, which can comprise a symbolic regression model, is configured to output an equation representative of the input data. In examples, enhanced model training system 104 is configured to replace the loss function used during the initial training of the pre-trained model with the equation generated by the surrogate ML model, and resume training using the replaced loss function. Additional details regarding the operation and/or functionality of enhanced model training system 104 are described in greater detail below.

Model configuration interface 106 comprises a user interface (UI) for configuring various aspects of enhanced model training system 104 discussed herein. In examples, model configuration interface 106 comprises one or more user selectable options, menus, input fields, etc. for defining the operation and/or functionality of enhanced model training system 104, including but not limited to the selection and/or input of samples and ground-truth annotations for training the pre-trained ML model and/or the surrogate ML model, parameters relating to the initial training criteria (e.g., the number of epochs), parameters relating to a type of ML model that is to be deployed, a convergence criteria for the ML model, the destination(s) to which the ML model is to be deployed, etc. In some implementations, model configuration interface 106 is configured to display the symbolic equation (from which the replacement loss function is generated) produced by the surrogate ML model, such that the symbolic equation can be edited by a user via one or more interactive elements and/or inputs. These examples are only illustrative, and it should be understood that model configuration interface 106 can be utilized to configure various other aspects of enhanced model training system 104 discussed herein.

Computing device 108 includes any number of one or more computing devices for obtaining and applying a deployed ML model. In various examples, such computing devices comprise one or more applications, operating systems, virtual machines, storage devices, etc. for applying the deployed ML model (e.g. in an inference mode) to generate a prediction given a data input. Computing device 108 comprises any type of stationary or mobile computing device, including a mobile computer or mobile computing device (e.g., a Microsoft^{®} Surface^{®} device, a personal digital assistant (PDA), a laptop computer, a notebook computer, a tablet computer, a netbook, etc.), a desktop computer, a server, a mobile phone or handheld device (e.g., a cell phone, a smart phone, etc.), a wearable computing device (e.g., a head-mounted device including smart glasses, a smart watch, etc.), an Internet-of-Things (IoT) device, or other type of stationary or mobile device. Computing device 108 is not limited to a physical machine, but may include other types of machines or nodes, such as a virtual machine. In an examples, computing device 108 interfaces with other components illustrated in FIG. 1 through APIs and/or by other mechanisms.

In various examples, deployed model 110 is generated by enhanced model training system 104 in accordance with the disclosed techniques and is trained based on a set of training data to make predictions based on a set of input data. In embodiments, deployed model 110 comprises various types of models, including but not limited to a classification model, a regression model, or any other model for performing ML tasks. In example embodiments, deployed model 110 comprises a deep learning model (e.g., a neural network), such as an artificial neural network (ANN) or a deep neural network (DNN), using artificial intelligence (AI) techniques, or any other model or network that comprise a plurality of layers that connect input variables or features with output layers. For instance, a neural network learning algorithm is used in various embodiments to generate and/or train deployed model 110 as a neural network that is an interconnected group of artificial neurons, also referred to as nodes of the neural network. Although some example embodiments are described herein with respect to deployed model 110 comprising a neural network, such embodiments are not intended to be limiting, and may include any other type of model configured to generate predictions based on a set of input data.

In various examples, a neural network is represented by a plurality of parameters stored in a parameter memory, collectively which represent aspects of the operation of deployed model 110. For instance, the parameters include a plurality of weights, gradients, biases, hyperparameters, etc. that describe how different nodes of deployed model 110 are mathematically related to each other.

In examples, training deployed model 110 is carried out by enhanced model training system 104 in various ways. In one implementation, deployed model 110 comprises a matrix (or a set of matrices) that include the parameters representing the model. Before training is performed, each element in the matrix may be assigned a value between 0 and 1 at random and/or based on estimations that may not necessarily be accurate. In examples, a processor (such as a hardware accelerator, which can comprise a tensor processing unit, a field programmable gate array (FPGA), an application specific integrated circuit (ASIC), a central processing unit (CPU), or any other suitable processor) obtains each of these parameters and determines a gradient (e.g., an error value corresponding to each parameter based on a loss function) and back propagate the gradient to update the parameter values (e.g., updating the weights and/or biases). In some example embodiments, this process is repeated until the model is deemed to have converged sufficiently (e.g., the error level is under a desired threshold), at which point deployed model 110 is considered trained and/or ready for deployment. This is only one illustration of training deployed model 110, and other techniques can also be implemented, as appreciated by those skilled in the relevant arts.

Implementations are not limited to the illustrative arrangement shown in FIG. 1. For instance, any of the components shown in FIG. 1 may be located in a same computing device, may co-located, or may be located remote from each other. Furthermore, system 100 comprises any number of other devices, networks, servers, and/or computing devices coupled in any manner in various embodiments.

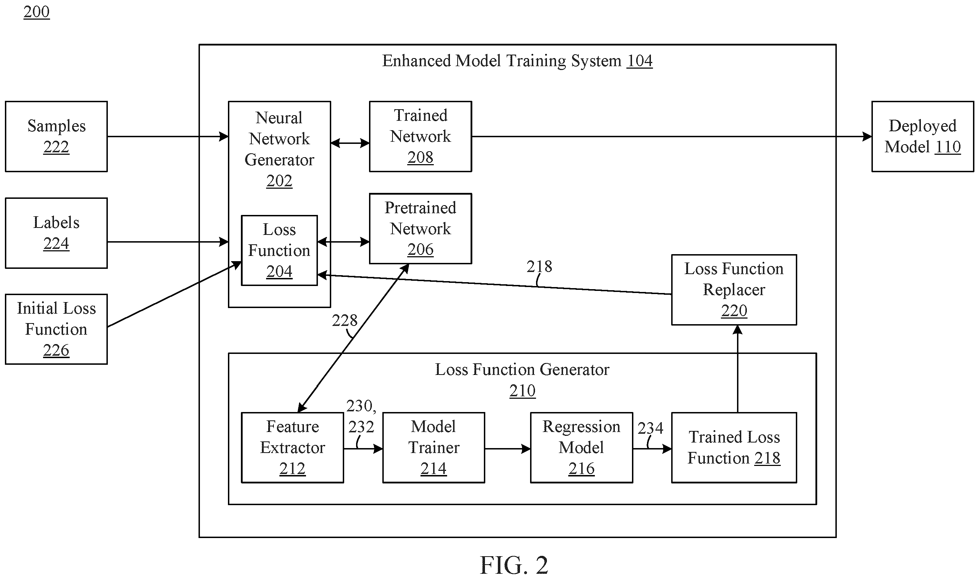

FIG. 2 depicts a block diagram of a system 200 for learning a loss function to train a machine learning model, in accordance with an example embodiment. As shown in FIG. 2, system 200 includes an example implementation of enhanced model training system 104, an example implementation of deployed model 110, a set of samples 222, a set of labels 224, and an initial loss function 226. Enhanced model training system 104 includes a neural network generator 202, a pretrained network 206, a trained network 208, a loss function generator 210, and a loss function replacer 220. Neural network generator 202 includes a loss function 204. Loss function generator 210 includes a feature extractor 212, a model trainer 214, a regression model 216, and a trained loss function 218.

In examples, neural network generator 202 is configured to generate pretrained network 206 and trained network 208 in accordance with the disclosed techniques. In one implementation, neural network generator 202 obtains samples 222 and labels 224 to generate pretrained network 206. In various implementations, a neural network trained by neural network generator 202 is configured to predict future behavior based on an analysis of patterns in a historical set of data.

Each sample of the set of samples 222 comprises an item of data from which one or more data features are extracted. Examples of such samples include text, numbers, images, audio, videos, or any combination of one or more of the foregoing. Each label of the set of labels 224 comprises a ground truth annotation for a corresponding sample of the set of samples 222. In examples, the ground truth annotation indicates a true answer (e.g., a value or classification known to be true) for a given sample. In various examples, the ground truth annotation is assigned to each sample, either manually (e.g., with the aid of a user input), and/or automatically. In examples, the ground truth annotation identifies the answer that the ML model (such as a neural network in this illustration) is intended to predict, given the corresponding sample as input. Collectively, samples 222 and labels 224 comprise a ground truth dataset. In some implementations, the ground truth dataset comprises one or more samples and labels obtained from another source (e.g., a repository) comprising predefined samples and associated labels.

In examples, neural network generator 202 generates pretrained network 206 and trained network 208 to make predictions based on a set of input data. As discussed above, each of pretrained network 206 and trained network 208 comprises a neural network or other type of network that contains a plurality of layers, each of which has interconnected neurons or nodes. Parameters within each network describe how different neurons of the model are related to each other. In various embodiments, neural network generator 202 applies loss function 204 to determine a gradient (e.g., an error corresponding to each parameter). Neural network generator back propagates the gradient to update the parameter values during training of the network. Each iteration of passing a set of samples through the network, applying the loss function to determine the gradients, and back propagating the gradient comprises one epoch of the training cycle.

In example embodiments, neural network generator 202 generates pretrained network 206 based the ground truth dataset (samples 222 and labels 224) and an application of an initial training criteria. In various embodiments, neural network generator 202 implements a supervised learning algorithm based on the ground truth dataset in generating pretrained network 206. In one example, the initial training criteria implements initial loss function 226 as loss function 204 applied by neural network generator. In some examples, the initial training criteria comprises a predetermined number of iterations (e.g., one, two, five, etc.) to generate pretrained network 206. In another example, neural network generator 202 applies an initial training criteria that indicates that training of pretrained network 206 concludes after a threshold convergence is satisfied. In one illustration, the threshold convergence is lower than the threshold convergence applied by neural network generator in generating trained network 208. For instance, pretrained network 206 may be trained in such a manner that a higher convergence may be achieved with additional iterations, but training is nevertheless concluded to conserve processing resources.

Initial loss function 226 comprises one or more mathematical formulas that quantify an error between a value predicted by a network (e.g., pretrained network 206) for an input item of data and a corresponding ground truth. In other words, the loss function computes a difference between an output of the model and an expected output. In some embodiments, neural network generator 202 is configured to optimize (e.g., minimize) the loss when generating a neural network, such that the generated neural network accurately predicts future behaviors. In various implementations, initial loss function 226 comprises one or more predefined loss functions (e.g., loss functions obtained from another source, entity, or repository), where the loss function is not generated based on a set of data used to train the target model (e.g., deployed model 110). For instance, the initial loss function comprises a mean squared error (MSE) (e.g., for regression tasks) or cross-entropy (e.g., for classification tasks). Other loss functions are also contemplated, such as loss functions that implement hinge loss, quantile loss, log-loss, log-cosh loss, focal loss, etc.

Given that initial loss function 226 is predefined, such a loss function often focuses on a single aspect of a problem sought to be solved by the network and/or may not capture the full complexity of an overall business problem for which the network is generated. In other words, such loss functions do not necessarily align with the real-world business objectives that the end-users of those models (e.g., business users) desire to focus on. As an illustration, consider a retail business that hires a ML developer to build a model to predict daily sales for the business. The ML developer would typically formulate this task as a regression problem with a MSE loss function. Rare but extreme spikes or dips in sales are assigned a high penalty with the MSE loss function (e.g., based on squaring the error), which can result in unintended skewing of the model. However, the owners of the retail business may be more interested in common everyday sales patterns rather than rare extreme events that may be addressed separately. Thus, even though the trained ML model may have a very good performance overall in terms of the MSE, its actual performance from the perspective of the owners of the retail business may not be optimal.

In another illustration, an area under the curve (AUC) technique may be utilized in ML models configured for classification tasks. Under this technique, AUC attempts to rank the model's predictions such that given any 2 pairs of positive and negative class examples, the predicted probability for the positive class is more than that of the negative class. Indeed, the performance of many classification ML models is measured via AUC. However, AUC is not a differentiable function and therefore cannot be used directly as a loss function for neural networks. In addition, even when the results (e.g., model errors and/or accuracy) are explained to users using AUC, the results are often not easily interpretable. Log loss, which is another loss function used for logistic/multi-class classification (as well as other types of tasks) is another example of a loss function that is not easy for business or other users to understand.

Accordingly, techniques described herein relate to producing a loss function, by loss function generator 210, that better reflects the business objectives and are easily interpreted by users, which can also be integrated as a drop-in replacement for initial loss function 226. In examples, feature extractor 212 is configured to pass a plurality of samples of data 228 (which can be a combination of one or more of samples 222, or a different set of samples) through pretrained network 206 in an inference mode. For each such sample, values of the last layer of pretrained network (e.g., before the loss function is applied) are extracted to generate an embedding (e.g., a vector representation). In examples, the embedding comprises the weights of the nodes of the last layer. Since pretrained network 206 was trained through one or more epochs, the embedding for the sample passed through the network comprises a sufficiently accurate representation of the sample (e.g., in a compressed vector format). In examples, feature extractor 212 is configured to repeat this process for each of the plurality of samples of data to produce a set of embeddings 230 (referred to herein as embedding set "E").

In examples, model trainer 214 is configured to train a surrogate model using the embedding set 230 as features for the model, and a set of ground truth annotations 232 corresponding to each of samples from which each embedding was produced. In implementations, model trainer 214 trains a symbolic regression model. For instance, the symbolic regression model utilizes an ML technique that searches a space of mathematical expressions (e.g., closed-form formulas) to represent or describe an input dataset. mathematical expressions (i.e., closed-form formulas) that best describe a dataset. For the purposes of illustration, consider a dataset with one-dimensional features X = [1, 2, 3, 4, 5] and ground-truth annotations Y= [0.5, 1.7, 3.2, 4.5, 6.1]. In such an example, the symbolic regression model aims to find the best-fitting mathematical expression to represent this data. After analysis, the symbolic regression model may discover the following equation to represent the dataset: *y* = 0.3*x*² + 0.2*x*. In this case, the symbolic regression algorithm has found a quadratic equation that fits the data well, revealing a non-linear relationship between features and ground truth annotations (e.g., labels).

Thus, model trainer 214 is configured to generate regression model 214 that comprises a symbolic regression model based on the embedding set and a corresponding set of ground truth annotations. In examples, regression model 216 outputs a mathematical relationship between the embedding set and the corresponding set of ground truth annotations. In various embodiments, the mathematic relationship comprises a mathematical equation that is a differentiable formula 234. In implementations, loss function generator 210 is configured to denote or store this mathematical relationship as trained loss function 218 (e.g., a custom loss function based on the data used to train the model).

Upon generation of trained loss function 218, loss function replacer 220 is configured to update loss function 204. For instance, loss function 204 is used to generate pretrained network 206 applied initial loss function 226, which can be a predefined loss function. In accordance with the disclosed techniques, initial loss function 226 implemented as loss function 204 is replaced with trained loss function 218, which is trained based at least on pretrained network 206.

After updating loss function 204 with trained loss function 218, neural network generator 202 is configured to resume training such that trained network 208 is generated. In examples, neural network generator 202 applies trained loss function 218 in a similar manner as described above. For instance, neural network generator 202 determines gradients of the parameters of the network based on trained loss function 218 and backpropagates the gradient to update the parameters (e.g., the weights and/or biases) to improve the model's accuracy. In implementations, neural network generator 202 performs one or more epochs in generating trained network 208. In some examples, neural network generator 202 performs any number of epochs until trained network 208 has converged sufficiently (e.g., has satisfied a convergence threshold, which may be higher than the convergence threshold for pretrained network 206). By resuming training of the network using trained loss function 218 (which is easily interpretable to users as a formula) rather than initial loss function 226, neural network generator generates a trained network that is more accurate and/or closer aligned to business objectives in various embodiments.

Upon completion of the generation of trained network 208, trained network 208 is deployed to one or more other destinations (e.g., devices, services, etc.) as deployed model 110. In implementations, deployed model 110 is used to perform one or more predictions of behaviors based on data input thereto, across various environments and/or industries. For instance, deployed model 110 is configured to perform predictions in classification tasks (e.g., to classify an input into one or more classifications), regression tasks (e.g., predicting a value corresponding to an input in a continuous, where the predicted value is across a continuous range of values), or other types of predictions as will be appreciated by those skilled in the relevant arts.

In some implementations, deployed model 110 is configured to be trained based on a set of training data (e.g., samples and associated ground truth annotations) in a particular target environment, such as a purchasing environment, a services environment, a computing environment, an economics environment, or various other environments. Based on the training of the deployed model 110 in the target environment, deployed model generates one or more predictions in the target environment.

In one illustration, deployed model 110 is configured to generate a prediction in a purchasing environment (e.g., a retail environment) based on a training dataset in such an environment. For example, deployed model 110 is configured to predict a consumer purchasing behavior (e.g., whether a consumer is likely to buy or not buy a product, whether a consumer is likely to misuse a form of payment, a predicted amount of spending, a type or category of spending, etc.). In another example, deployed model 110 is trained based on a set of training data in a services environment and is configured to generate a prediction in the services environment, such as whether a consumer is likely to interact with an advertisement. In another example, deployed model 110 is trained based on a training data set in an economics environment and generates a prediction in the economics environment, such as generating a prediction regarding an entity's sales and/or expenses, predicting values of products and/or real estate properties, etc. In yet another example, deployed model 110 is trained based on data in a computing environment, and is configured to generate one or more predictions in the computing environment (e.g., whether computing activities and/or alerts are likely to constitute a security incident, predictions regarding computing device battery, processor, storage, or network resource usage, analysis of text and/or images, etc.). These examples are only illustrative, and it should be understood that deployed model 110 can perform prediction tasks in various other environments and/or industries, as described herein.

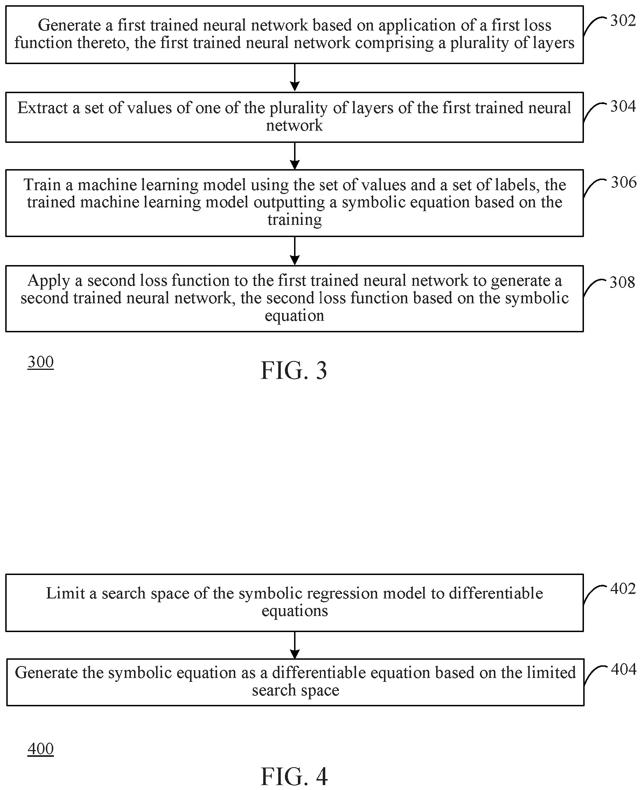

In accordance with one or more embodiments, a loss function is learned for training a neural network. For example, FIG. 3 shows a flowchart 300 of a method for training a model with a learned loss function, in accordance with an example embodiment. In an embodiment, flowchart 300 is implemented by system 100 as shown in FIG. 1 and/or system 200 as shown in FIG. 2. Accordingly, flowchart 300 will be described with reference to FIGS. 1 and 2. Other structural and operational embodiments will be apparent to persons skilled in the relevant art(s) based on the following discussion regarding flowchart 300, system 100 of FIG. 1 and system 200 of FIG. 2.

Flowchart 300 begins with step 302. In step 302, a first trained neural network is generated based on application of a first loss function thereto. In examples, the first trained neural network comprises a plurality of layers. For instance, with reference to FIG. 2, neural network generator is configured to generate pretrained network 206 based on application of loss function 204. In examples, loss function 204 implements initial loss function 206 during the generation of pretrained network 206. In various implementations, neural network generator 202 is configured to obtain a ground truth dataset of samples (e.g., samples 222, denoted herein as "S" and associated labels 224, denoted herein as "Y") in generating pretrained network 206, as described herein.

In some implementations, initial loss function 226 is selected from among a plurality of loss functions based on machine learning task (e.g., the type and/or purpose of the model to be generated). For instance, if neural network generator 202 is to generate a model to perform classification tasks (e.g., to classify input data into one or more classifications), a loss function that implements a cross-entropy technique may be selected. In another illustration, if the model is to perform a regression tasks, a loss function that implements a MSE technique may be selected. These examples are only illustrative, and other types of loss functions may be chosen depending on the machine learning task to be performed.

Upon selection of the loss function, neural network generator 202 is configured to generate pretrained network 206 using the ground truth dataset and the selected loss function. In some implementations, pretrained network 206 comprises a trained ML model such as a deep learning model (e.g., a neural network which comprises a plurality of layers) configured to predict the ground truth annotations. In examples, pretrained network 206 need not be trained to the point that pretrained network 206 converges. Rather, neural network generator 202 may cease training of the model based on an initial training criteria, which may comprise a predetermined number of epochs (e.g., one or two iterations of the training cycle). In this manner, pretrained network 206 comprises a model that is sufficiently accurate from which meaningful representations of the data sample can be extracted, as described in greater detail below.

In step 304, a set of values of one of the plurality of layers of the first trained neural network is extracted. For instance, with reference to FIG. 2, feature extractor 212 is configured to obtain pretrained network 206 and pass a plurality of samples through pretrained network 206. Upon passing each of the samples through the pretrained network, feature extractor 212 extracts a set of values of one of the layers of pretrained network 206. In various implementations, the values extracted comprise one or more of the parameters of a layer of pretrained network 206. In some examples, feature extractor 212 is configured to extract values of a plurality of layers of pretrained network 206. For instance, the set of values is extracted from two or more hidden layers of pretrained network 206 (e.g., the values comprising weights across a plurality of the layers).

As described in greater detail below, feature extractor 212 is configured to extract the values of one (or more) of the layers of the trained neural network to generate (e.g., prepare) a training dataset that will be used as training data for a surrogate ML model. In various examples, each sample is fed through pretrained network 206 and values (e.g., embeddings) corresponding to the last layer of the network are extracted for generating a feature set for the surrogate ML model. In various examples, the values comprise weights of the final layer of pretrained network 206.

In step 306, a machine learning model is trained using the set of values and a set of labels, where the trained machine learning model outputs a symbolic equation based on the training. For instance, with reference to FIG. 2, model trainer 214 is configured to train a surrogate model (i.e., regression model 216) that comprises a machine learning model using the set of values and a set of corresponding labels (e.g., ground truth annotations corresponding to each embedding). In examples, regression model 216 comprises a symbolic regression model that outputs a symbolic equation based on the dataset used for its training. Accordingly, while one purpose of neural network generator 202 is to generate a model for performing predictions (e.g., generating inferences), one purpose of model trainer 214 is to generate a surrogate model to output a symbolic equation that can be used by neural network generator 202 as a loss function for training the model (e.g., trained network 208).

As discussed, the dataset for training regression model 216 is based on a set of features and labels. In one implementation, the dataset is defined by a set of features (X), which comprise the embeddings (E) obtained from pretrained network 206 described herein, and labels (Y) which comprise the ground-truth annotations for each sample that was passed through pretrained network 206 to generate the corresponding embedding. It should be understood that various types of datasets can be used for this purpose. For instance, the set of features can be generated based on embeddings can be generated from samples 222, a subset of those samples, a set of different samples that were not included in samples 222, or any combination of the foregoing, while the labels comprise the ground truth annotations corresponding to the samples used to generate each embedding. In embodiments, the training of regression model 216 implements a supervised learning technique based on the features X and the labels Y.

In some implementation, while pretrained network 206 may comprise one of many different types of architectures, regression model 216 is configured to comprise a ML model of a symbolic regression family in various embodiments. In examples, regression model 216 that comprises a symbolic regression model utilizes ML techniques that searches a space of mathematical expressions (e.g., closed-form formulas) that best describe a dataset. Various techniques can be employed for this purpose, such as genetic programming, Bayesian methods, neural networks, etc. However, regression model 216 utilizes any one or more of such techniques (or other techniques) in which a symbolic regression algorithm is implemented such that a symbolic equation is output, or otherwise generated, by the model. In various examples, the symbolic equation that is output by the model is a differentiable function that mathematically relates the labels Y with the features X. In various examples, the differentiable function is a closed-form expression (e.g., an expression that does not rely on other variables).

In various examples, loss function generator 210 is configured to set (e.g., store) a new loss function based on the differentiable function generated by regression model 216. The new loss function (also referred to as a learned loss function) is a function of the embeddings E and the labels Y. For instance, the learned loss function can be represented as Loss (E, Y). Thus, the learned loss function takes as arguments the embeddings (e.g., the values of the last layer in some embodiments) and the ground-truth annotations Y to return a number quantifying the difference representing an amount of mismatch between a predicted value and the ground-truth annotations Y. The predicted value can be deterministically determined from E using various techniques or normalizing functions, such as SoftMax or other functions as will be appreciated by those skilled in the relevant arts. In other words, the predicted value can comprise the embeddings E, or an embedding normalized therefrom.

Based on training regression model 216, a loss function in a symbolic form is therefore generated, which can comprise a closed-form learned continuous loss function. As discussed earlier and elsewhere herein, this learned loss function is easier to interpret by users of the target model (e.g., trained network 208) while also optimizing the business metric that is the focus of the model.

In step 308, a second loss function is applied to the first trained neural network to generate a second trained neural network, where the second loss function is based on the symbolic equation. For instance, with reference to FIG. 2, neural network generator 202 is configured to apply trained loss 218 that is generated based on the symbolic equation output by regression model 216 to generate trained network 208. Based on application of trained loss function 218, neural network generator 202 resumes the training such that trained network 208 is trained until a stopping criteria is achieved (e.g., trained network 208 has sufficiently converged). In other words, neural network generator 202 is configured to continue the training of the network using the learned loss function rather than initial loss function 226.

In implementations, since trained loss function 218 is differentiable, neural network generator 202 can resume training in various ways. For instance, the training is resumed with gradients evaluated via one or more automatic differentiation libraries utilized in various types of deep learning or other neural network frameworks (e.g., PyTorch, TensorFlow, etc.). In various embodiments, neural network generator 202 is configured to backpropagate the gradients and/or perform one or more model optimizations during training of trained network 208. As a result of using a learned loss function, the resulting model (e.g., trained network 208) comprises an enhanced accuracy, as the loss function utilized during training is generated based on the samples of data tied to the underlying business objective, rather than initial loss function 226 that utilizes other techniques (e.g., MSE).

For instance, as noted above, initial loss function 226 calculates a loss in a manner that lacks a meaningful relationship to the data on which the model is trained, which can result in skewing of the model during training. By replacing this loss function with a learned loss function, the loss can be calculated based on a function that is tailored to the training data, resulting in a more accurate model that converges with fewer iterations compared to models that only utilize predefined loss functions.

Not only is the model trained in a more accurate manner, but the generated loss function also becomes aligned with the business objective that the target model is trying to solve (e.g., due to the learned loss function being generated based on the ground truth annotations provided by one or more users). In addition, the loss function can be utilized as a drop-in replacement for the predefined loss function, allowing for straightforward integration of the learned loss function.

Still further, since the learned loss function can be generated using one or more human annotations (e.g., ground truth annotations) that have already been made for initial training of the model, additional human resources (e.g., manual and/or expensive effort) are not required to generate the learned loss function.

Still further, the learned loss function is generated as a differentiable formula using common symbols, which is interpreted more easily by users. As a result of the increased understanding of the loss function and how it was generated, model training can conclude with fewer overall iterations (rather than conventional techniques in which predefined loss functions that are hard to interpret are relied upon in concluding the training of model). As noted elsewhere, such benefits have numerous advantages, such as improvements to computer resource utilization among others.

In various examples, neural network generator 202 resumes training based on samples 222 and labels 224, in a similar manner that neural network generator 202 trained pretrained network 206. However, in various examples, training of trained network 208 is performed with more iterations than training of pretrained network 206, such that trained network 208 is trained until convergence of the model (or other suitable stopping criteria representing of a threshold accuracy of the trained model). While examples are described herein that training is resumed based on samples 222 and labels 224, it should be understood that a different set of samples and/or labels can be utilized, which may or may not include the samples and labels from samples 222 and labels 224.

It should also be understood that while pretrained network 206 and trained network 208 are illustrated as separate, these networks not be separate networks. In examples, neural network generator 202 generates pretrained network 206 based on an initial training criteria using initial loss function 226. After generation of the learned loss function, neural network generator 202 applies the learned loss function to resume training on the generated network (e.g., pretrained network 206) with the learned loss function, resulting in trained network 208. Thus, in examples, the networks are not necessarily distinct, but rather represent different phases of the training process.

As described above, regression model 216 is configured to output a symbolic equation that is a differentiable formula. For example, FIG. 4 shows a flowchart 400 of a method for generating a symbolic equation as a differentiable equation based on a limited search space, in accordance with an example embodiment. In an embodiment, flowchart 400 is implemented by system 100 as shown in FIG. 1 and/or system 200 as shown in FIG. 2. Accordingly, flowchart 400 will be described with reference to FIGS. 1 and 2. Other structural and operational embodiments will be apparent to persons skilled in the relevant art(s) based on the following discussion regarding flowchart 400, system 100 of FIG. 1, and system 200 of FIG. 2.

Flowchart 400 begins with step 402. In step 402, a search space of the symbolic regression model is limited to differentiable equations. For instance, with reference to FIG. 2, model trainer 214 is configured to limit the search space of regression model 216 to differentiable equations. In this manner, the set of primitive operations that regression model 216 can search through will be limited to differentiable operations (e.g., differentiable operations such as addition, subtraction, multiplication, division, etc.). Thus, based on chain and product rules for mathematical operations, the composition and/or product of differentiable functions will still be a differentiable function. As a result, mathematical expressions that regression model 216 searches through will result in a final output of a differentiable expression. In other words, any mathematical expression produced as an output of the symbolic expression trained on the dataset described above will be a differentiable function as a result of the limited search space.

In step 404, the symbolic equation is generated as a differentiable equation based on the limited search space. For instance, with reference to FIG. 2, regression model 216 is configured to generate the symbolic equation as a differentiable equation based on the limited search space. As discussed above, trained loss function 218 comprises the symbolic equation generated by this surrogate model. Since trained loss function 218 is differentiable, the trained loss function can be integrated into neural network generator 202 with relatively little effort and training of the network can resume. In other words, since neural network generator 202 relies upon utilization of a loss function that is at least once differentiable for purposes of back propagation and training, the trained loss function that is generated as a differentiable function can be integrated into the generator with ease.

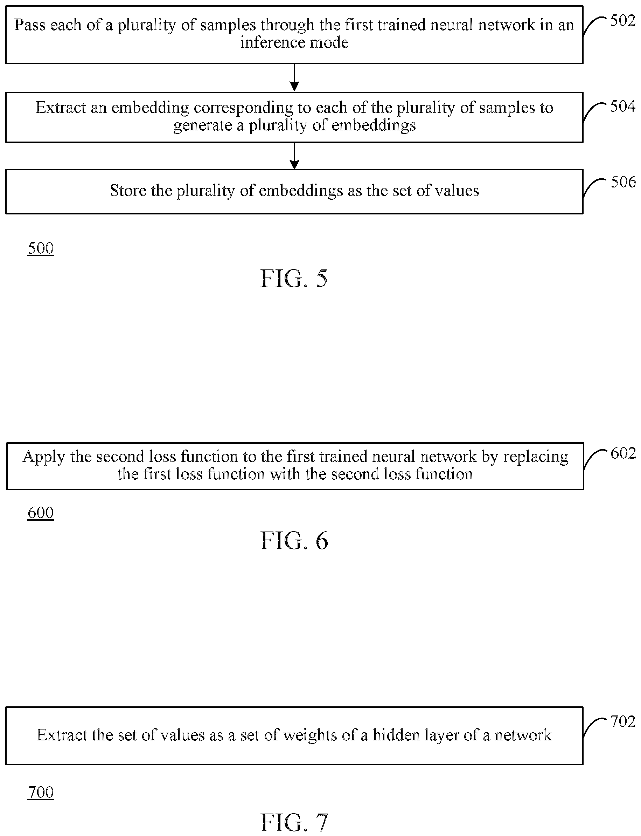

As described above, regression model 216 is configured to output a symbolic equation that is a differentiable formula. For example, FIG. 5 shows a flowchart 500 of a method for extracting embeddings from a neural network, in accordance with an embodiment. In an embodiment, flowchart 500 is implemented by system 100 as shown in FIG. 1 and/or system 200 as shown in FIG. 2. Accordingly, flowchart 500 will be described with reference to FIGS. 1 and 2. Other structural and operational embodiments will be apparent to persons skilled in the relevant art(s) based on the following discussion regarding flowchart 500, system 100 of FIG. 1, and system 200 of FIG. 2.

Flowchart 500 begins with step 502. In step 502, each of a plurality of samples are passed through the first trained neural network in an inference mode. For instance, with reference to FIG. 2, feature extractor 212 is configured to pass each of a plurality of samples through pretrained network 206 in an inference mode. In examples, the plurality of samples comprises one or more of samples 222 and/or one or more other samples that are not included in the set of samples 222. Feature extractor 212 may pass each sample through pretrained network 206 in various ways, such as in one or more batches.

In step 504, an embedding corresponding to each of the plurality of samples is extracted to generate a plurality of embeddings. For instance, with reference to FIG. 2, feature extractor 212 is configured to extract, for each of the plurality of samples, an embedding corresponding thereto. For example, feature extractor 212 is configured to extract a vector representation for each sample that is passed through pretrained network 206 in an inference mode. In implementations, the vector representation comprises an embedding that contains a plurality of dimensions that represent the input, or the sample. In other words, feature extractor 212 obtains or generates a vector that comprises a plurality of dimensions that represents the input fed into the model. As discussed elsewhere, feature extractor 212 extracts the embedding by obtaining values of one or more layers of pretrained network (e.g., parameters corresponding to one or more nodes of a given layer of the network, such as a final layer) in various embodiments.

Although feature extractor 212 passes each such sample through pretrained network 206 in an inference mode, feature extractor 212 need not obtain or store the final output (e.g., the prediction) of pretrained network 206. Rather, as discussed previously, feature extractor 212 is configured to obtain values corresponding to one (or more) of the layers prior to the final output of pretrained network (e.g., the layer immediately preceding the final output, or the layer immediately before the loss function is applied).

In implementations, the foregoing process is repeated for each of the plurality of samples to produce multiple embeddings, one for each sample that is passed through pretrained network 206.

In step 506, the plurality of embeddings are stored as the set of values. For instance, with reference to FIG. 2, feature extractor 212 is configured to obtain an embedding for each sample input to pretrained network 206 in an inference mode, and store the plurality of embeddings as the set of values (referred to herein as a set of embeddings E) that is used to train the surrogate model (i.e., regression model 216). Using the embedding set E as the features and corresponding ground truth annotations for each of the embeddings, model trainer 214 trains regression model 216 as described earlier, resulting in the generation of trained loss function 218.

As described above, neural network generator 202 is configured to resume training of a neural network with learned loss function. For example, FIG. 6 shows a flowchart 600 of a method for replacing a loss function of a neural network, in accordance with an embodiment. In an embodiment, flowchart 600 is implemented by system 100 as shown in FIG. 1 and/or system 200 as shown in FIG. 2. Accordingly, flowchart 600 will be described with reference to FIGS. 1 and 2. Other structural and operational embodiments will be apparent to persons skilled in the relevant art(s) based on the following discussion regarding flowchart 600, system 100 of FIG. 1, and system 200 of FIG. 2.

Flowchart 600 begins with step 602. In step 602, the second loss function is applied to the first trained neural network by replacing the first loss function with the second loss function. For instance, with reference to FIG. 2, loss function replacer 220 is configured to replace initial loss function 226 that is implemented as loss function 204 with trained loss function 218 generated by regression model 216. In this manner, neural network generator 202 is configured to resume training on pretrained network 206 using trained loss function 218, rather than a predefined loss function (e.g., MSE, cross entropy, etc.), to generate a trained network (i.e., trained network 208).

In some instances, following generation and deployment of trained network 208, data drift occurs in which statistical properties of the data used to train a model and/or the prediction that the model seeks to make change over time, resulting in degraded performance of the model. In such instances, techniques disclosed herein may be utilized in a similar fashion as described above to re-learn a new loss function that would replace a previously learned loss function, to improve performance of the model. For instance, feature extractor 212 may extract embeddings of a layer of trained network 208 in a similar manner as described above (e.g., using a set of samples fed through trained network 208, which comprise more recent samples of data) to generate a set of embeddings. Model trainer 214 may generate another surrogate regression model based on set of embeddings and a corresponding set of ground truth annotations, where the regression model outputs a new learned symbolic expression that is used as the new learned loss function. This new learned loss function can then be replaced with the previously learned loss function, allowing neural network generator 202 to improve the training of trained network 208.

As described above, feature extractor 202 is configured to extract values of one or more of the plurality of layers of pretrained network 206. For example, FIG. 7 shows a flowchart 700 of a method for extracting a set of weights of a neural network, in accordance with an embodiment. In an embodiment, flowchart 700 is implemented by system 100 as shown in FIG. 1 and/or system 200 as shown in FIG. 2. Accordingly, flowchart 700 will be described with reference to FIGS. 1 and 2. Other structural and operational embodiments will be apparent to persons skilled in the relevant art(s) based on the following discussion regarding flowchart 700, system 100 of FIG. 1, and system 200 of FIG. 2.

Flowchart 700 begins with step 702. In step 702, a set of values is extracted as a set of weights of a hidden layer of a network. For instance, with reference to FIG. 2, feature extractor 212 is configured to pass each of a plurality of samples through pretrained network 206 in an inference mode. In some implementations, upon passing each sample through pretrained network 206, feature extractor is configured to extract a set of weights of one or more of the nodes of one (or more) of a plurality of hidden layers of pretrained network 206. In some examples, the hidden layer from which the set of weights is extracted is a final (e.g., the last) hidden layer (e.g., prior to an output layer) of pretrained network 206 among a plurality of other hidden layers.

In various examples, the final hidden layer represents a sufficiently close representation of the sample input to pretrained network 206 in vector form (e.g., comprising a plurality of dimensions). In other words, this vector representation is deemed a sufficiently close approximation to the ground truth label corresponding to the sample, given that pretrained network 206 has gone through at least an initial training. Accordingly, this final layer comprises an embedding that is an accurate representation of the input sample, which is then used (as part of a set of embeddings) to train regression model 216. As discussed above, however, this example is only illustrative. In other examples, feature extractor 212 is configured to extract a set of weights from any other layer of pretrained network 206, or any combination weights across a plurality of layers.

### III. Example Mobile Device and Computer System Implementation

As noted herein, the embodiments described, along with any circuits, components and/or subcomponents thereof, as well as the flowcharts/flow diagrams described herein, including portions thereof, and/or other embodiments, may be implemented in hardware, or hardware with any combination of software and/or firmware, including being implemented as computer program code (program instructions) configured to be executed in one or more processors and stored in a computer readable storage medium, or being implemented as hardware logic/electrical circuitry, such as being implemented together in a system-on-chip (SoC), a field programmable gate array (FPGA), and/or an application specific integrated circuit (ASIC). A SoC may include an integrated circuit chip that includes one or more of a processor (e.g., a microcontroller, microprocessor, digital signal processor (DSP), etc.), memory, one or more communication interfaces, and/or further circuits and/or embedded firmware to perform its functions.

Embodiments disclosed herein may be implemented in one or more computing devices that may be mobile (a mobile device) and/or stationary (a stationary device) and may include any combination of the features of such mobile and stationary computing devices. Examples of computing devices in which embodiments may be implemented are described as follows with respect to FIG. 8. FIG. 8 shows a block diagram of an exemplary computing environment 800 that includes a computing device 802. Computing device 802 is an example of first computing device 102 and computing device 108 shown in FIG. 1, which may each include one or more of the components of computing device 802. In some embodiments, computing device 802 is communicatively coupled with devices (not shown in FIG. 8) external to computing environment 800 via network 804. Network 804 comprises one or more networks such as local area networks (LANs), wide area networks (WANs), enterprise networks, the Internet, etc., and may include one or more wired and/or wireless portions. Network 804 may additionally or alternatively include a cellular network for cellular communications. Computing device 802 is described in detail as follows.

Computing device 802 can be any of a variety of types of computing devices. For example, computing device 802 may be a mobile computing device such as a handheld computer (e.g., a personal digital assistant (PDA)), a laptop computer, a tablet computer, a hybrid device, a notebook computer, a netbook, a mobile phone (e.g., a cell phone, a smart phone, etc.), a wearable computing device (e.g., a head-mounted augmented reality and/or virtual reality device including smart glasses), or other type of mobile computing device. Computing device 802 may alternatively be a stationary computing device such as a desktop computer, a personal computer (PC), a stationary server device, a minicomputer, a mainframe, a supercomputer, etc.

As shown in FIG. 8, computing device 802 includes a variety of hardware and software components, including a processor 810, a storage 820, one or more input devices 830, one or more output devices 850, one or more wireless modems 860, one or more wired interfaces 880, a power supply 882, a location information (LI) receiver 884, and an accelerometer 886. Storage 820 includes memory 856, which includes non-removable memory 822 and removable memory 824, and a storage device 890. Storage 820 also stores an operating system 812, application programs 814, and application data 816. Wireless modem(s) 860 include a Wi-Fi modem 862, a Bluetooth modem 864, and a cellular modem 866. Output device(s) 850 includes a speaker 852 and a display 854. Input device(s) 830 includes a touch screen 832, a microphone 834, a camera 836, a physical keyboard 838, and a trackball 840. Not all components of computing device 802 shown in FIG. 8 are present in all embodiments, additional components not shown may be present, and any combination of the components may be present in a particular embodiment. These components of computing device 802 are described as follows.

A single processor 810 (e.g., central processing unit (CPU), microcontroller, a microprocessor, signal processor, ASIC (application specific integrated circuit), and/or other physical hardware processor circuit) or multiple processors 810 may be present in computing device 802 for performing such tasks as program execution, signal coding, data processing, input/output processing, power control, and/or other functions. Processor 810 may be a single-core or multi-core processor, and each processor core may be single-threaded or multithreaded (to provide multiple threads of execution concurrently). Processor 810 is configured to execute program code stored in a computer readable medium, such as program code of operating system 812 and application programs 814 stored in storage 820. The program code is structured to cause processor 810 to perform operations, including the processes/methods disclosed herein. Operating system 812 controls the allocation and usage of the components of computing device 802 and provides support for one or more application programs 814 (also referred to as "applications" or "apps"). Application programs 814 may include common computing applications (e.g., e-mail applications, calendars, contact managers, web browsers, messaging applications), further computing applications (e.g., word processing applications, mapping applications, media player applications, productivity suite applications), one or more machine learning (ML) models, as well as applications related to the embodiments disclosed elsewhere herein. Processor(s) 810 may include one or more general processors (e.g., CPUs) configured with or coupled to one or more hardware accelerators, such as one or more NPUs and/or one or more GPUs.

Any component in computing device 802 can communicate with any other component according to function, although not all connections are shown for ease of illustration. For instance, as shown in FIG. 8, bus 806 is a multiple signal line communication medium (e.g., conductive traces in silicon, metal traces along a motherboard, wires, etc.) that may be present to communicatively couple processor 810 to various other components of computing device 802, although in other embodiments, an alternative bus, further buses, and/or one or more individual signal lines may be present to communicatively couple components. Bus 806 represents one or more of any of several types of bus structures, including a memory bus or memory controller, a peripheral bus, an accelerated graphics port, and a processor or local bus using any of a variety of bus architectures.

Storage 820 is physical storage that includes one or both of memory 856 and storage device 890, which store operating system 812, application programs 814, and application data 816 according to any distribution. Non-removable memory 822 includes one or more of RAM (random access memory), ROM (read only memory), flash memory, a solid-state drive (SSD), a hard disk drive (e.g., a disk drive for reading from and writing to a hard disk), and/or other physical memory device type. Non-removable memory 822 may include main memory and may be separate from or fabricated in a same integrated circuit as processor 810. As shown in FIG. 8, non-removable memory 822 stores firmware 818, which may be present to provide low-level control of hardware. Examples of firmware 818 include BIOS (Basic Input/Output System, such as on personal computers) and boot firmware (e.g., on smart phones). Removable memory 824 may be inserted into a receptacle of or otherwise coupled to computing device 802 and can be removed by a user from computing device 802. Removable memory 824 can include any suitable removable memory device type, including an SD (Secure Digital) card, a Subscriber Identity Module (SIM) card, which is well known in GSM (Global System for Mobile Communications) communication systems, and/or other removable physical memory device type. One or more of storage device 890 may be present that are internal and/or external to a housing of computing device 802 and may or may not be removable. Examples of storage device 890 include a hard disk drive, a SSD, a thumb drive (e.g., a USB (Universal Serial Bus) flash drive), or other physical storage device.

One or more programs may be stored in storage 820. Such programs include operating system 812, one or more application programs 814, and other program modules and program data. Examples of such application programs may include, for example, computer program logic (e.g., computer program code/instructions) for implementing enhanced model training system 104, model configuration interface 106, deployed model 110, neural network generator 202, pretrained network 206, trained network 208, loss function generator 210, feature extractor 212, model trainer 214, regression model 216, loss function replacer 220, as well as any of flowcharts 300, 400, 500, 600, 700, and/or any individual steps thereof.

Storage 820 also stores data used and/or generated by operating system 812 and application programs 814 as application data 816. Examples of application data 816 include web pages, text, images, tables, sound files, video data, and other data, which may also be sent to and/or received from one or more network servers or other devices via one or more wired or wireless networks. Storage 820 can be used to store further data including a subscriber identifier, such as an International Mobile Subscriber Identity (IMSI), and an equipment identifier, such as an International Mobile Equipment Identifier (IMEI). Such identifiers can be transmitted to a network server to identify users and equipment.

A user may enter commands and information into computing device 802 through one or more input devices 830 and may receive information from computing device 802 through one or more output devices 850. Input device(s) 830 may include one or more of touch screen 832, microphone 834, camera 836, physical keyboard 838 and/or trackball 840 and output device(s) 850 may include one or more of speaker 852 and display 854. Each of input device(s) 830 and output device(s) 850 may be integral to computing device 802 (e.g., built into a housing of computing device 802) or external to computing device 802 (e.g., communicatively coupled wired or wirelessly to computing device 802 via wired interface(s) 880 and/or wireless modem(s) 860). Further input devices 830 (not shown) can include a Natural User Interface (NUI), a pointing device (computer mouse), a joystick, a video game controller, a scanner, a touch pad, a stylus pen, a voice recognition system to receive voice input, a gesture recognition system to receive gesture input, or the like. Other possible output devices (not shown) can include piezoelectric or other haptic output devices. Some devices can serve more than one input/output function. For instance, display 854 may display information, as well as operating as touch screen 832 by receiving user commands and/or other information (e.g., by touch, finger gestures, virtual keyboard, etc.) as a user interface. Any number of each type of input device(s) 830 and output device(s) 850 may be present, including multiple microphones 834, multiple cameras 836, multiple speakers 852, and/or multiple displays 854.

One or more wireless modems 860 can be coupled to antenna(s) (not shown) of computing device 802 and can support two-way communications between processor 810 and devices external to computing device 802 through network 804, as would be understood to persons skilled in the relevant art(s). Wireless modem 860 is shown generically and can include a cellular modem 866 for communicating with one or more cellular networks, such as a GSM network for data and voice communications within a single cellular network, between cellular networks, or between the mobile device and a public switched telephone network (PSTN). Wireless modem 860 may also or alternatively include other radio-based modem types, such as a Bluetooth modem 864 (also referred to as a "Bluetooth device") and/or Wi-Fi modem 862 (also referred to as an "wireless adaptor"). Wi-Fi modem 862 is configured to communicate with an access point or other remote Wi-Fi-capable device according to one or more of the wireless network protocols based on the IEEE (Institute of Electrical and Electronics Engineers) 802.11 family of standards, commonly used for local area networking of devices and Internet access. Bluetooth modem 864 is configured to communicate with another Bluetooth-capable device according to the Bluetooth short-range wireless technology standard(s) such as IEEE 802.15.1 and/or managed by the Bluetooth Special Interest Group (SIG).

Computing device 802 can further include power supply 882, LI receiver 884, accelerometer 886, and/or one or more wired interfaces 880. Example wired interfaces 880 include a USB port, IEEE 1394 (FireWire) port, a RS-232 port, an HDMI (High-Definition Multimedia Interface) port (e.g., for connection to an external display), a DisplayPort port (e.g., for connection to an external display), an audio port, and/or an Ethernet port, the purposes and functions of each of which are well known to persons skilled in the relevant art(s). Wired interface(s) 880 of computing device 802 provide for wired connections between computing device 802 and network 804, or between computing device 802 and one or more devices/peripherals when such devices/peripherals are external to computing device 802 (e.g., a pointing device, display 854, speaker 852, camera 836, physical keyboard 838, etc.). Power supply 882 is configured to supply power to each of the components of computing device 802 and may receive power from a battery internal to computing device 802, and/or from a power cord plugged into a power port of computing device 802 (e.g., a USB port, an A/C power port). LIreceiver 884 may be used for location determination of computing device 802 and may include a satellite navigation receiver such as a Global Positioning System (GPS) receiver or may include other type of location determiner configured to determine location of computing device 802 based on received information (e.g., using cell tower triangulation, etc.). Accelerometer 886 may be present to determine an orientation of computing device 802.

Note that the illustrated components of computing device 802 are not required or all-inclusive, and fewer or greater numbers of components may be present as would be recognized by one skilled in the art. For example, computing device 802 may also include one or more of a gyroscope, barometer, proximity sensor, ambient light sensor, digital compass, etc. Processor 810 and memory 856 may be co-located in a same semiconductor device package, such as being included together in an integrated circuit chip, FPGA, or system-on-chip (SOC), optionally along with further components of computing device 802.

In embodiments, computing device 802 is configured to implement any of the above-described features of flowcharts herein. Computer program logic for performing any of the operations, steps, and/or functions described herein may be stored in storage 820 and executed by processor 810.

In some embodiments, server infrastructure 870 may be present in computing environment 800 and may be communicatively coupled with computing device 802 via network 804. Server infrastructure 870, when present, may be a network-accessible server set (e.g., a cloud-based environment or platform). As shown in FIG. 8, server infrastructure 870 includes clusters 872. Each of clusters 872 may comprise a group of one or more compute nodes and/or a group of one or more storage nodes. For example, as shown in FIG. 8, cluster 872 includes nodes 874. Each of nodes 874 are accessible via network 804 (e.g., in a "cloud-based" embodiment) to build, deploy, and manage applications and services. Any of nodes 874 may be a storage node that comprises a plurality of physical storage disks, SSDs, and/or other physical storage devices that are accessible via network 804 and are configured to store data associated with the applications and services managed by nodes 874. For example, as shown in FIG. 8, nodes 874 may store application data 878.

Each of nodes 874 may, as a compute node, comprise one or more server computers, server systems, and/or computing devices. For instance, a node 874 may include one or more of the components of computing device 802 disclosed herein. Each of nodes 874 may be configured to execute one or more software applications (or "applications") and/or services and/or manage hardware resources (e.g., processors, memory, etc.), which may be utilized by users (e.g., customers) of the network-accessible server set. For example, as shown in FIG. 8, nodes 874 may operate application programs 876. In an implementation, a node of nodes 874 may operate or comprise one or more virtual machines, with each virtual machine emulating a system architecture (e.g., an operating system), in an isolated manner, upon which applications such as application programs 876 may be executed.

In an embodiment, one or more of clusters 872 may be co-located (e.g., housed in one or more nearby buildings with associated components such as backup power supplies, redundant data communications, environmental controls, etc.) to form a datacenter, or may be arranged in other manners. Accordingly, in an embodiment, one or more of clusters 872 may be a datacenter in a distributed collection of datacenters. In embodiments, exemplary computing environment 800 comprises part of a cloud-based platform.

In an embodiment, computing device 802 may access application programs 876 for execution in any manner, such as by a client application and/or a browser at computing device 802.

For purposes of network (e.g., cloud) backup and data security, computing device 802 may additionally and/or alternatively synchronize copies of application programs 814 and/or application data 816 to be stored at network-based server infrastructure 870 as application programs 876 and/or application data 878. For instance, operating system 812 and/or application programs 814 may include a file hosting service client configured to synchronize applications and/or data stored in storage 820 at network-based server infrastructure 870.

In some embodiments, on-premises servers 892 may be present in computing environment 800 and may be communicatively coupled with computing device 802 via network 804. On-premises servers 892, when present, are hosted within an organization's infrastructure and, in many cases, physically onsite of a facility of that organization. On-premises servers 892 are controlled, administered, and maintained by IT (Information Technology) personnel of the organization or an IT partner to the organization. Application data 898 may be shared by on-premises servers 892 between computing devices of the organization, including computing device 802 (when part of an organization) through a local network of the organization, and/or through further networks accessible to the organization (including the Internet). Furthermore, on-premises servers 892 may serve applications such as application programs 896 to the computing devices of the organization, including computing device 802. Accordingly, on-premises servers 892 may include storage 894 (which includes one or more physical storage devices such as storage disks and/or SSDs) for storage of application programs 896 and application data 898 and may include one or more processors for execution of application programs 896. Still further, computing device 802 may be configured to synchronize copies of application programs 814 and/or application data 816 for backup storage at on-premises servers 892 as application programs 896 and/or application data 898.

Embodiments described herein may be implemented in one or more of computing device 802, network-based server infrastructure 870, and on-premises servers 892. For example, in some embodiments, computing device 802 may be used to implement systems, clients, or devices, or components/subcomponents thereof, disclosed elsewhere herein. In other embodiments, a combination of computing device 802, network-based server infrastructure 870, and/or on-premises servers 892 may be used to implement the systems, clients, or devices, or components/subcomponents thereof, disclosed elsewhere herein.

As used herein, the terms "computer program medium," "computer-readable medium," "computer-readable storage medium," and "computer-readable storage device," etc., are used to refer to physical hardware media. Examples of such physical hardware media include any hard disk, optical disk, SSD, other physical hardware media such as RAMs, ROMs, flash memory, digital video disks, zip disks, MEMs (microelectronic machine) memory, nanotechnology-based storage devices, and further types of physical/tangible hardware storage media of storage 820. Such computer-readable media and/or storage media are distinguished from and non-overlapping with communication media and propagating signals (do not include communication media and propagating signals). Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared, and other wireless media, as well as wired media. Embodiments are also directed to such communication media that are separate and non-overlapping with embodiments directed to computer-readable storage media.

As noted above, computer programs and modules (including application programs 814) may be stored in storage 820. Such computer programs may also be received via wired interface(s) 880 and/or wireless modem(s) 860 over network 804. Such computer programs, when executed or loaded by an application, enable computing device 802 to implement features of embodiments discussed herein. Accordingly, such computer programs represent controllers of the computing device 802.

Embodiments are also directed to computer program products comprising computer code or instructions stored on any computer-readable medium or computer-readable storage medium. Such computer program products include the physical storage of storage 820 as well as further physical storage types.

### IV. Additional Example Embodiments

A system for training a model with a learned loss function is disclosed herein. The system includes: a processor; and a memory device that stores program code structured to cause the processor to: generate a first trained neural network based on application of a first loss function thereto, the first trained neural network comprising a plurality of layers; extract a set of values of one of the plurality of layers of the first trained neural network; train a machine learning model using the set of values and a set of labels, the trained machine learning model outputting a symbolic equation based on the training; and apply a second loss function to the first trained neural network to generate a second trained neural network, the second loss function based on the symbolic equation.

In one implementation of the foregoing system, the second trained neural network is trained based on a set of training data in a target environment, the target environment comprising one of: a purchasing environment, a services environment, a computing environment, or an economics environment; and the second trained neural network is configured to generate a prediction in the target environment.

In another implementation of the foregoing system, the program code is structured to cause the processor to apply the second loss function to the first trained neural network by replacing the first loss function with the second loss function.

In another implementation of the foregoing system, the machine learning model comprises a symbolic regression model.

In another implementation of the foregoing system, the program code is further structured to cause the processor to: limit a search space of the symbolic regression model to differentiable equations; and generate the symbolic equation as a differentiable equation based on the limited search space.

In another implementation of the foregoing system, the plurality of layers comprises a plurality of hidden layers, and the set of values comprises a set of weights of one of the hidden layers.

In another implementation of the foregoing system, the one of the hidden layers comprises a final hidden layer prior to an output layer.

In another implementation of the foregoing system, the program code is further structured to cause the processor to extract the set of values by: passing each of a plurality of samples through the first trained neural network in an inference mode; extracting an embedding corresponding to each of the plurality of samples to generate a plurality of embeddings; and storing the plurality of embeddings as the set of values.

A method for training a model with a learned loss function is disclosed herein. The method includes: generating a first trained neural network based on application of a first loss function thereto, the first trained neural network comprising a plurality of layers; extracting a set of values of one of the plurality of layers of the first trained neural network; training a machine learning model using the set of values and a set of labels, the trained machine learning model outputting a symbolic equation based on the training; and applying a second loss function to the first trained neural network to generate a second trained neural network, the second loss function based on the symbolic equation.

In one implementation of the foregoing method, the second trained neural network is trained based on a set of training data in a target environment, the target environment comprising one of: a purchasing environment, a services environment, a computing environment, or an economics environment; and the second trained neural network is configured to generate a prediction in the target environment.

In another implementation of the foregoing method, the applying the second loss function to the first trained neural network comprises replacing the first loss function with the second loss function.

In another implementation of the foregoing method, the machine learning model comprises a symbolic regression model.

In another implementation of the foregoing method, the method comprises limiting a search space of the symbolic regression model to differentiable equations; and generating the symbolic equation as a differentiable equation based on the limited search space.

In another implementation of the foregoing method, the plurality of layers comprises a plurality of hidden layers, and the set of values comprises a set of weights of one of the hidden layers.

In another implementation of the foregoing method, the extracting the set of values comprises: passing each of a plurality of samples through the first trained neural network in an inference mode; extracting an embedding corresponding to each of the plurality of samples to generate a plurality of embeddings; and storing the plurality of embeddings as the set of values.

A computer-readable storage medium is disclosed herein. The computer-readable storage medium has computer program code recorded thereon that when executed by at least one processor causes the at least one processor to perform a method comprising: generating a first trained neural network based on application of a first loss function thereto, the first trained neural network comprising a plurality of layers; extracting a set of values of one of the plurality of layers of the first trained neural network; training a machine learning model using the set of values and a set of labels, the trained machine learning model outputting a symbolic equation based on the training; and applying a second loss function to the first trained neural network to generate a second trained neural network, the second loss function based on the symbolic equation.

In one implementation of the foregoing computer-readable storage medium, the second trained neural network is trained based on a set of training data in a target environment, the target environment comprising one of: a purchasing environment, a services environment, a computing environment, or an economics environment; and the second trained neural network is configured to generate a prediction in the target environment.

In another implementation of the foregoing computer-readable storage medium, the machine learning model comprises a symbolic regression model.

In another implementation of the foregoing computer-readable storage medium, the method further comprises: limiting a search space of the symbolic regression model to differentiable equations; and generating the symbolic equation as a differentiable equation based on the limited search space.

In another implementation of the foregoing computer-readable storage medium, the plurality of layers comprises a plurality of hidden layers, and the set of values comprises a set of weights of one of the hidden layers.

### V. Conclusion

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

In the discussion, unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of the embodiment for an application for which it is intended. Furthermore, where "based on" is used to indicate an effect being a result of an indicated cause, it is to be understood that the effect is not required to only result from the indicated cause, but that any number of possible additional causes may also contribute to the effect. Thus, as used herein, the term "based on" should be understood to be equivalent to the term "based at least on."

While various embodiments of the present disclosure have been described above, it should be understood that they have been presented by way of example only, and not limitation. It will be understood by those skilled in the relevant art(s) that various changes in form and details may be made therein without departing from the spirit and scope of the embodiments as defined in the appended claims. Accordingly, the breadth and scope of the claimed embodiments should not be limited by any of the above-described exemplary embodiments, but should be defined only in accordance with the following claims and their equivalents.

## Claims

1. A system (100, 200, 800) for training a model with a learned loss function, the system comprising:
a processor (810); and
a memory device (856) that stores program code (814, 876, 896) structured to cause the processor to:
generate a first trained neural network (206) based on application of a first loss function (226) thereto, the first trained neural network comprising a plurality of layers;
extract a set of values (230) of one of the plurality of layers of the first trained neural network (206);
train a machine learning model (216) using the set of values and a set of labels (232), the trained machine learning model outputting a symbolic equation based on the training; and
apply a second loss function (218) to the first trained neural network to generate a second trained neural network (208), the second loss function based on the symbolic equation.

2. The system of claim 1, wherein the second trained neural network is trained based on a set of training data in a target environment, the target environment comprising one of: a purchasing environment, a services environment, a computing environment, or an economics environment; and
wherein the second trained neural network is configured to generate a prediction in the target environment.

3. The system of claim 1, wherein the program code is structured to cause the processor to apply the second loss function to the first trained neural network by replacing the first loss function with the second loss function.

4. The system of claim 1, wherein the machine learning model comprises a symbolic regression model.

5. The system of claim 4, wherein the program code is further structured to cause the processor to:
limit a search space of the symbolic regression model to differentiable equations; and
generate the symbolic equation as a differentiable equation based on the limited search space.

6. The system of claim 1, wherein the plurality of layers comprises a plurality of hidden layers, and wherein the set of values comprises a set of weights of one of the hidden layers.

7. The system of claim 6, wherein the one of the hidden layers comprises a final hidden layer prior to an output layer.

8. The system of claim 1, wherein the program code is further structured to cause the processor to extract the set of values by:
passing each of a plurality of samples through the first trained neural network in an inference mode;
extracting an embedding corresponding to each of the plurality of samples to generate a plurality of embeddings; and
storing the plurality of embeddings as the set of values.

9. A method (300) for training a model with a learned loss function, comprising:
generating (302) a first trained neural network based on application of a first loss function thereto, the first trained neural network comprising a plurality of layers;
extracting (304) a set of values of one of the plurality of layers of the first trained neural network;
training (306) a machine learning model using the set of values and a set of labels, the trained machine learning model outputting a symbolic equation based on the training; and
applying (308) a second loss function to the first trained neural network to generate a second trained neural network, the second loss function based on the symbolic equation.

10. The method of claim 9, wherein the second trained neural network is trained based on a set of training data in a target environment, the target environment comprising one of: a purchasing environment, a services environment, a computing environment, or an economics environment; and
wherein the second trained neural network is configured to generate a prediction in the target environment.

11. The method of claim 9, wherein the machine learning model comprises a symbolic regression model.

12. The method of claim 11, further comprising:
limiting a search space of the symbolic regression model to differentiable equations; and
generating the symbolic equation as a differentiable equation based on the limited search space.

13. The method of claim 9, wherein the plurality of layers comprises a plurality of hidden layers, and wherein the set of values comprises a set of weights of one of the hidden layers.

14. The method of claim 9, wherein the extracting the set of values comprises:
passing each of a plurality of samples through the first trained neural network in an inference mode;
extracting an embedding corresponding to each of the plurality of samples to generate a plurality of embeddings; and
storing the plurality of embeddings as the set of values.

15. A computer-readable storage medium (856) having program instructions (814, 876, 896) recorded thereon that, when executed by a processor (810), perform any of the methods of claims 9-14.
